# EUROPEAN PATENT APPLICATION

(11) **EP 3 726 489 A1**
(43) Date of publication of application: **21.10.2020**
(21) Application number: 20167837.2
(22) Date of filing: 02.04.2020
(51) Int. Cl.: G08B 3/10, G08B 5/36, G08B 7/06, G08B 21/18, G08B 21/22, G08B 25/00, G08B 25/08, G08B 25/10, G08B 25/14, G08B 31/00

(54) **ENVIROMENTAL MONITORING SYSTEM**

(30) Priority: 19.04.2019 CN 201910315883
(71) Applicant: CONTA S.R.O, 441 00 Podborany (CZ)
(72) Inventor: Bassett, Alexander Anthony Denny, Suzhou, Jiangsu (CN); Li, Jay, Suzhou City, Jiangsu (CN)
(74) Representative: Murgitroyd & Company

(57) **Abstract**

An environmental monitoring system intended to assist persons with performing cleaning duties, the system comprising a plurality of sensors (10) for detecting the level of dust and other environmental levels in respective rooms of a building and for transmitting data of the detected levels over the internet or other network to a remote server (13) which analyses the data and transmits a signal to a wireless remote appliance (such as a smartphone (15), tablet PC (16) or robotic vacuum cleaner (18)) indicative that a surface in the building needs vacuum cleaning.

## Description

This invention relates to an environmental monitoring system intended to assist persons with performing cleaning duties.

Every dwelling and other building requires cleaning and hitherto this has generally been carried out on an ad-hoc basis when a person can see that a surface in a building is dirty or dusty and therefore needs cleaning. Alternatively, some persons perform cleaning tasks according to a schedule. In either event, persons have to pay attention to cleaning tasks and it will be appreciated that this can easily be overlooked. Also, persons may not realise that a surface in a building needs cleaning because it does not look dirty.

With the foregoing in mind we have now devised an environmental monitoring system intended to assist persons with performing cleaning duties.

In accordance with the present invention, there is provided an environmental monitoring system comprising a sensor for detecting settled dust or other airborne particulate matter in a building and means for transmitting a wireless signal to a remote appliance indicative that a surface in the building needs vacuum cleaning in accordance with the level of particulate matter detected by the sensor.

In use, the sensor causes the wireless appliance to become aware that the level of dust or other particulate matter on a surface in the building is such that the surface needs vacuum cleaning. Accordingly, persons do not have to pay attention to cleaning tasks, such that the risk of overlooking cleaning tasks is avoided.

The remote appliance could be a robotic vacuum cleaner which is subsequently activated to clean a floor surface in the building according to the level of particulate matter detected by the sensor.

Alternatively, the remote appliance could be a smart phone or a tablet computer, which is arranged to provide an indication to a user that the level of particulate matter detected by the sensor is indicative that a surface in the building needs vacuum cleaning, for example using a manually-operated vacuum cleaner.

The system may comprise a plurality of sensors arranged in different areas of the building, said means being arranged to transmit a wireless signal to the remote appliance indicative of which area of the building has a surface that needs cleaning.

The sensor may be connected to a local data network in the building, for example wirelessly using Wi-Fi or another communication protocol.

The local network may be connected to a remote data network, such as the Internet or worldwide web (WWW).

The remote appliance may be wirelessly connected to a said network.

The system may comprise means for determining whether a surface in the building needs cleaning based on data output from the sensor, said determining means may be provided in the sensor, or in the remote appliance, or in a processing device connected to a network with which the sensor is connected.

The determining means may also determine whether the surface in the building needs cleaning based on data output from one or more of the following data sources:
a) A motion detector or occupancy in the building: it will be appreciated that rooms which have a high occupancy level will require more frequent cleaning;
b) A temperature and/or humidity detector: it will be appreciated that temperature and humidity are factors that determine the amount of mould and bacteria growth. Also temperature and humidity are factors that are likely to promote proliferation of dust mites and secondary bacterial growth on dead skin cells, insect faecal matter and animal dander;
c) An environment or air quality detector: it will be appreciated that areas with low air quality will require more frequent cleaning. The detector may detect the level of PM 2.5 and/or PM 10 particulate pollution in the atmosphere;
d) A volatile organic compounds (VOC) detector;
e) A gas detector, for example for detecting levels of carbon dioxide, nitrogen dioxide and/or ozone;
f) A noise detector: again it will be appreciated that the level of noise in a room can be indicative of the occupancy level;
g) A weather sensor;
h) A clock and/or a calendar;
i) A pollen sensor;
j) A database containing calendar information of users of the building. Again, this can provide an indication of the occupancy level of the building.

A said data source may be located in or adjacent the building. Alternatively or additionally, a said data source may be connected to a network with which the remote appliance is connected: for example air quality and weather data may be determined over the network from data supplied by a third party.

The levels at which the system provides an indication that a surface in the building needs cleaning may be selectable or adjustable by a user.

Also in accordance with the present invention there is provided a method of use of the above-mentioned environmental monitoring system to provide an indication of whether a surface in the building needs vacuum cleaning.

Also in accordance with the present invention, there is provided a method of determining whether a surface in the building needs vacuum cleaning, the method comprising analysing the output of a sensor for detecting dust or other airborne particulate matter in the building and transmitting a wireless signal to a remote appliance indicative that the surface needs vacuum cleaning in accordance with the level particulate matter detected by the sensor.

The method may comprise activating a robotic vacuum cleaner to clean a floor surface in the building according to the level of particulate matter detected by the sensor.

Alternatively, the method may comprise providing an indication to a user that the level of particulate matter detected by a sensor is indicative that a surface in the building needs vacuum cleaning.

The method may comprise analysing data from one or more of the above-mentioned sensors and/or data sources to further determine whether the surface needs cleaning.

The method may comprise analysing the output of a plurality of sensors for detecting dust or other airborne particulate matter in respect of areas of the building and transmitting a wireless signal to the remote appliance indicative of which area of the building has a surface that needs vacuum cleaning.

Also in accordance with the present invention, there is provided a sensor for the above-mentioned environmental monitoring system, the sensor comprising means for detecting the level dust or other airborne particulate matter in the building and for transmitting a data signal to a remote appliance in accordance with the level particulate matter detected.

The sensor may comprise a fan arranged to draw air for the surrounding environment.

The sensor may comprise an air quality detector.

The sensor may comprise a temperature and/or a humidity sensor.

Embodiments of the present invention will now be described by way of examples only and with reference to the accompanying drawings, in which:
Figure 1 is a schematic diagram of an embodiment of environmental monitoring system in accordance with the present invention;
Figure 2 is a sectional view through a local sensor of the environmental monitoring system of Figure 1; and
Figure 3 is a schematic diagram of an alternative embodiment of environmental monitoring system in accordance with the present invention.

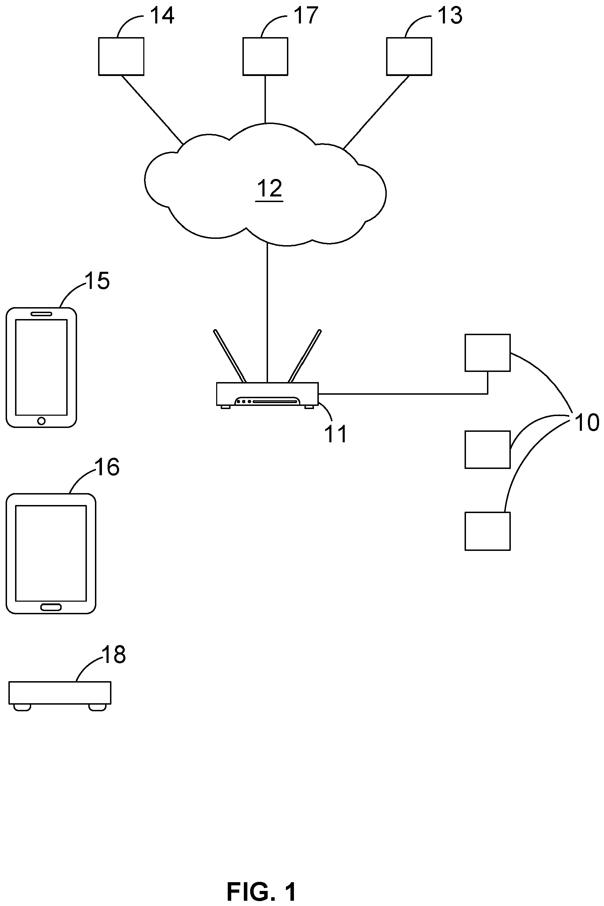

Referring to Figure 1 of the drawings, there is shown an environmental monitoring system comprising a plurality of environmental sensing units (10) located in respective rooms of a dwelling. The environmental sensing units (10) are connected to a router (11) either wirelessly and/or by a cable to form a local network. The router (11) is connected to a remote network such as the Internet (12) to which a server (13) and GPRS network (14) are connected.

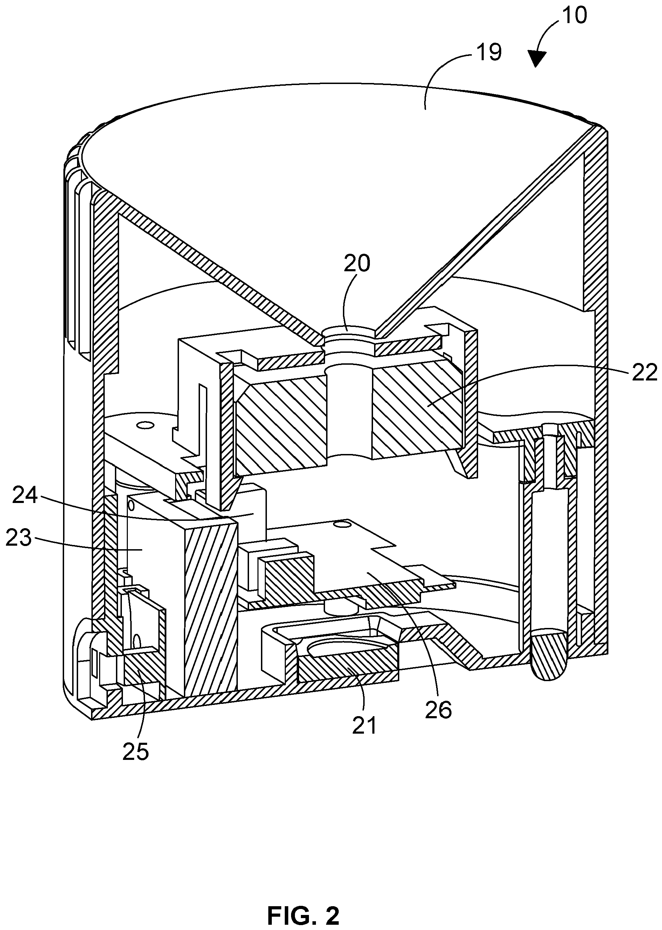

Referring to Figure 2 of the drawings, each environmental sensing unit (10) comprises an upwardly-facing conical inlet (19) which tapers outwardly and upwardly from an opening (20) at its base. A centrifugal fan (21) inside the environmental sensing unit (10) draws air into the unit (10) through the opening (20) at the base of the inlet (19). Air flowing through the opening (20) passes through a dust sensor (22) into a chamber inside the unit (10) where an environmental sensor (23) and a temperature and humidity sensor (24) are disposed. These sensors (22, 23, 24) are connected to a control circuit (26) inside the unit (10). An external interface (25) is provided with a status indicator LED and one or more switches for turning the unit on/off and/or for resetting it. The control unit (26) also comprises a network interface for communicating with the router (11).

Each environmental sensing unit (10) comprises a unique MAC address and is pre-configured to output data to a unique IP address at which the server (13) is located. In use, the environment sensing units (10) communicate with the server (13) over the Internet (12) to provide the server (13) with data obtained from the sensors (22, 23, 24). The server (13) analyses the received data to determine whether the room in which each environmental sensing unit (10) is located needs vacuum cleaning. The server (13) can also obtain data from a third party server (17) relating to the pollen index where the dwelling is known as being located. It will be appreciated that this information is provided by the user during a registration process of the system.

In the event that the server (13) determines that vacuum cleaning is needed, the server (13) sends a signal via the Internet (12) to a user's smartphone (15) or tablet PC (16). In the case of a smartphone (15), the data can be sent via the GPRS network (14). In either case the data can be sent to the router (11) where it is subsequently transmitted to the smartphone (15) or tablet PC (16) via Wi-Fi.

The smartphone (15) and tablet PC (16) are enabled with application software (i.e. an app) which is specific to the environmental monitoring system of the present invention. The application software provides the user with data obtained from the environmental sensing units (10) and the user's dwelling and also provides an indication that a room in the dwelling needs vacuum cleaning.

The user can then perform a cleaning and, once completed can send a signal back to the server to let it know that vacuum cleaning has been performed. In the event that the user has a robotic vacuum cleaner (18), the user may be able to activate the robotic vacuum cleaner (18) using the application software on the smartphone (15) or tablet PC (16). Alternatively, the server may be able to activate the robotic vacuum cleaner (18) directly when the server (13) detects that the room in which the robotic vacuum cleaner (18) is located needs vacuum cleaning. Again, it will be appreciated that the location of the robotic vacuum cleaner can be provided to the server (13) during the registration process.

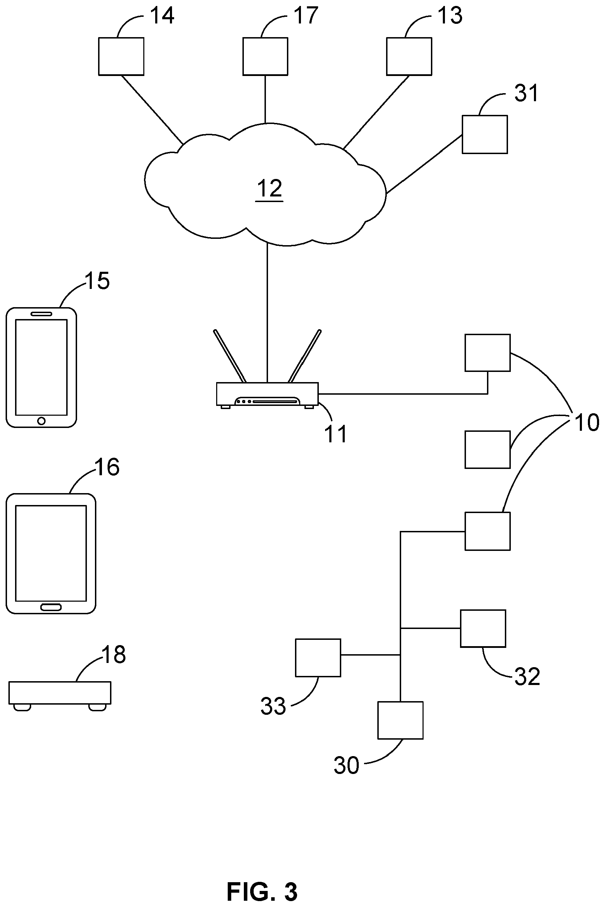

Referring to Figure 3 of the drawings, there is shown an environmental monitoring system which has advanced features relative to the environmental monitoring system of Figure 1. In Figures 1 and 3, like parts are given like reference numerals. One or more of the environmental sensing units (10) of the system of Figure 3 may comprise a detector (30) for detecting airborne volatile organic compounds. The unit (10) may also comprise a gas detector (32), for example for detecting carbon dioxide, nitrogen dioxide and/or ozone. An environmental sensing unit (10) may also comprise a motion detector (33) for detecting room occupancy. The data collected by sensors (30, 32, 33) is transmitted to the remote server (13), so that the server can further use data from these sources to determine whether a room in the dwelling needs vacuum cleaning. The server (13) may also obtain data from third-party servers (31) relating to the air quality index, the season, the current weather and the weather forecast.

During the registration process, the user may be able to configure the system, for example according to whether the system is located in a dwelling, office or hospital environment where the considerations for cleaning are different. The user may also be able to inform the server that a user of the system has an allergy or other medical condition which necessitates special levels of cleanliness.

The application software may also obtain data from a user's calendar so as to determine occupancy levels and to configure vacuum cleaning tasks around the user's occupancy.

The present invention thus provides an environmental monitoring system intended to assist persons with performing cleaning duties, the system comprising a plurality of sensors (10) for detecting the level of dust and other environmental levels in respective rooms of a building and for transmitting data of the detected levels over the internet or other network to a remote server (13) which analyses the data and transmits a signal to a wireless remote appliance (such as a smartphone (15), tablet PC (16) or robotic vacuum cleaner (18)) indicative that a surface in the building needs vacuum cleaning.

It will be appreciated that an environmental monitoring system in accordance with the present invention is extremely flexible in its abilities and essentially relies on the underlying levels of dust or other airborne particulate matter to determine whether a room in a dwelling or other location needs vacuum cleaning.

## Claims

1. An environmental monitoring system comprising a sensor for detecting dust and other airborne particulate matter in a building and means for transmitting a wireless signal to a remote appliance indicative that a surface in the building needs vacuum cleaning in accordance with the level of particulate matter detected by the sensor.

2. An environmental monitoring system as claimed in claim 1, comprising a plurality of sensors arranged in different areas of the building, said means being arranged to transmit a wireless signal to the remote appliance indicative of which area of the building has a surface that needs cleaning.

3. An environmental monitoring system as claimed in claim 1, comprising comprise means for determining whether a surface in the building needs cleaning based on data output from the sensor, the determining means being be provided in a processing device connected to a network with which the sensor is connected.

4. An environmental monitoring system as claimed in claim 3, in which the determining means further determines whether the surface in the building needs cleaning based on data output from a motion or occupancy detector in the building.

5. An environmental monitoring system as claimed in claim 3, in which the determining means further determines whether the surface in the building needs cleaning based on data output from a temperature and/or humidity detector.

6. An environmental monitoring system as claimed in claim 3, in which the determining means further determines whether the surface in the building needs cleaning based on data output from an air quality detector.

7. An environmental monitoring system as claimed in claim 3, in which the determining means further determines whether the surface in the building needs cleaning based on data output from a gas detector.

8. A method of use of the environmental monitoring system of claim 1 to provide an indication of whether a surface in a building needs vacuum cleaning.

9. A method of determining whether a surface in the building needs vacuum cleaning, the method comprising analysing the output of a sensor for detecting dust and other airborne particulate matter in the building and transmitting a wireless signal to a remote appliance indicative that the surface needs vacuum cleaning in accordance with the level particulate matter detected by the sensor.

10. A method as claimed in claim 10, further comprising activating a robotic vacuum cleaner to clean a floor surface in the building according to the level of particulate matter detected by the sensor.

11. A method as claimed in claim 10, further comprising providing a visual indication to a user that the level of particulate matter detected by a sensor is indicative that a surface in the building needs vacuum cleaning.

12. A sensor for the environmental monitoring system of claim 1, the sensor comprising means for detecting the level dust and other airborne particulate matter in the building and for transmitting a data signal to a remote appliance in accordance with the level particulate matter detected.
